Europäisches Patentamt

European Patent Office

Office européen des brevets

(19)

(11) Numéro de publication : **0 185 923**
**B1**

(12)

# FASCICULE DE BREVET EUROPÉEN

(45) Date de publication du fascicule du brevet :
28.03.90

(51) Int. Cl.⁵ : **G 02 B   6/44**

(21) Numéro de dépôt : **85114665.4**

(22) Date de dépôt : **19.11.85**

(54) Support de raccordement de fibres optiques.

(30) Priorité : **20.11.84 FR 8417655**

(43) Date de publication de la demande :
**02.07.86 Bulletin 86/27**

(45) Mention de la délivrance du brevet :
**28.03.90 Bulletin 90/13**

(84) Etats contractants désignés :
**DE FR GB SE**

(56) Documents cités :
**CA--A-- 1 096 216**
**DE--A-- 2 621 823**
**PATENTS ABSTRACTS OF JAPAN, vol. 7, no. 2, 7 janvier 1983, page 129P166 & JP - A - 57 163 211**
**PATENTS ABSTRACTS OF JAPAN, vol. 7, no. 134, 11 juin 1983, page 85P203 & JP - A - 58 50 508**
**PATENTS ABSTRACTS OF JAPAN, vol. 4, no. 103, 23 juillet 1980, page 113P20 & JP - A - 55 62 414**

(73) Titulaire : **MARS-ACTEL Société Anonyme dite:**
**25, Avenue Jean-Jaurès**
**F-08330 Vrigne-aux-Bois (FR)**

(72) Inventeur : **Boyer, Jean-Pierre**
**7 rue d'Arsonval**
**F-75015 Paris (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

## Description

L'invention concerne le raccordement de joncs à plusieurs fibres optiques chacun. Un câble comporte plusieurs joncs de par exemple cinq ou dix fibres optiques chacun, et les raccordements entre les joncs d'un câble et les joncs d'un autre câble sont enfermés dans une boîte de raccordement étanche. Il est courant de raccorder deux joncs ayant chacun dix fibres optiques par exemple, ou de raccorder un jonc de dix fibres optiques à deux joncs de cinq fibres optiques chacun, par des dispositifs de raccordement de type collectif ou individuel fixés sur un support qui permet le stockage d'une certaine longueur de fibres optiques, le support étant enfermé dans la boîte de raccordement qui contient en général plusieurs supports.

Les câbles sont fixés aux extrémités de la boîte de raccordement et les joncs sont séparés à partir de la fixation des câbles. La longueur des joncs entre les extrémités des câbles et le support auquel ils aboutissent est généralement limitée à la longueur nécessaire et n'autorise qu'un faible déplacement du support hors de la boîte. Les joncs sont fixés sur le support à leur extrémité à partir de laquelle les fibres optiques sont séparées entre elles. Le stockage sur le support d'une certaine longueur de fibres optiques est nécessaire pour accéder à un poste de travail, tel qu'un banc d'épissurage par exemple.

D'autre part les supports étant empilés dans la boîte de raccordement, il est nécessaire, pour accéder aux fibres optiques d'un support, d'ôter ceux qui sont au-dessus de lui.

Par ailleurs il n'est pas toujours possible de disposer le poste de travail à proximité immédiate de la boîte de raccordement, notamment dans le cas des câbles enterrés, ce qui oblige à stocker sur chaque support une longueur de fibres optiques suffisante pour atteindre le poste de travail.

La présente invention a pour but de remédier aux inconvénients des dispositifs connus, en permettant la manipulation individuelle des supports pour les placer à proximité du poste de travail et limiter ainsi la longueur des fibres optiques stockées à la longueur nécessaire pour accéder au poste de travail, avec une réserve de longueur permettant, si nécessaire, le remplacement d'un dispositif de raccordement entre deux fibres optiques.

L'invention a pour objet un support de raccordement de fibres optiques pour le raccordement des fibres optiques d'au moins un jonc à celles d'au moins un autre jonc, et notamment des fibres optiques d'un jonc à celles d'un ou deux autres joncs, par l'intermédiaire de dispositifs de raccordement, lesdits joncs étant destinés à être fixés en extrémité audit support et ces joncs étant issus de câbles destinés à être fixés en extrémité à une boîte de raccordement destinée à contenir ledit support ainsi que d'autres supports identiques pour le raccordement des fibres optiques d'autres joncs desdits câbles, caractérisé par le fait que ledit support est constitué par une galette comportant un fond, une paroi latérale extérieure munie d'ouvertures, une paroi latérale intérieure munie d'ouvertures, et au moins un cylindre à l'intérieur de ladite paroi latérale intérieure, la paroi latérale intérieure délimitant ainsi d'une part avec la paroi latérale extérieure une couronne extérieure et d'autre part avec le(s) cylindre(s) une couronne intérieure, lesdites ouvertures respectivement ménagées dans lesdites parois latérales extérieure et intérieure étant destinées à permettre l'amenée des joncs jusqu'à ladite couronne intérieure, ladite couronne intérieure étant destinée à servir au stockage de longueurs de réserve des fibres optiques et des dispositifs de raccordement, et ladite couronne extérieure étant destinée à servir au stockage de longueurs de réserve des joncs lorsque ledit support est en place dans la boîte de raccordement.

D'autres caractéristiques et avantages de l'invention apparaîtront au cours de la description qui va suivre d'exemples de réalisation illustrés par les figures annexées dans lesquelles :

La figure 1 est une vue de face d'un support de l'invention,
— la figure 2 est une vue de profil, en coupe partielle, du support de la figure 1,
— la figure 3 est une vue de face d'une variante du support de la figure 1,
— la figure 4 est une vue partielle, en coupe, d'un cylindre central de la figure 3,
— la figure 5 est une vue de face d'une variante du support de l'invention,
— la figure 6 est une vue en coupe d'une partie du support de la figure 5.

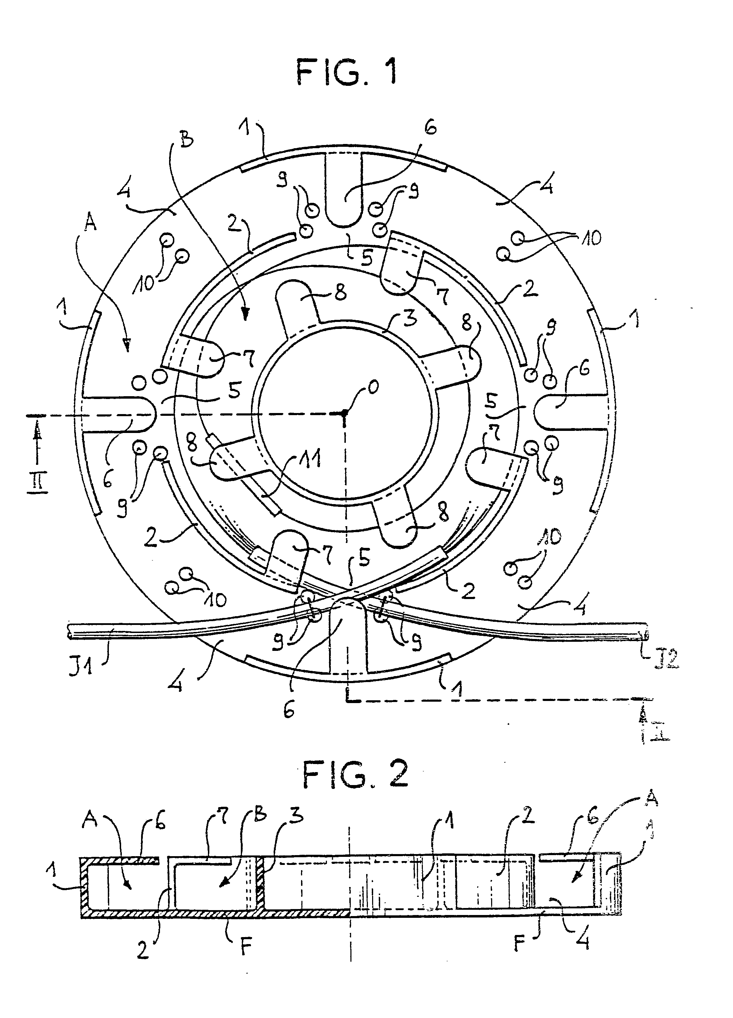

Le support représenté figures 1 et 2 se présente sous la forme d'une galette cylindrique obtenue par moulage d'un matériau plastique. Le support comporte une paroi latérale extérieure 1 de forme cylindrique ayant de larges ouvertures 4, une paroi latérale intérieure 2 également de forme cylindrique ayant de larges ouvertures 5, et un cylindre central 3. Les parois extérieure et intérieure, et le cylindre central sont solidaires d'un fond F. Les parois extérieure 1 et intérieure 2 délimitent entre elles une couronne extérieure A, circulaire, la paroi intérieure 2 et le cylindre central 3 délimitant entre eux une couronne intérieure B, circulaire. Les ouvertures 4 dans la paroi extérieure 1 sont situées en regard de la paroi intérieure 2 ; de même les ouvertures 5 dans la paroi intérieure 2 sont situées en regard de la paroi extérieure 1. La paroi extérieure 1 comporte, à sa partie supérieure des pattes 6 dirigées vers le centre O du support ; de même la paroi intérieure 2 comporte, à sa partie supérieure, des pattes 7 dirigées vers le centre O du support. Le cylindre central 3 comporte à sa partie supérieure, des pattes 8 dirigées vers la paroi intérieure 2, chaque patte 8 étant située entre deux pattes 7 de la paroi intérieure 2, et de préférence équidistante de deux pattes 7. Le fond F du support comporte des paires de trous 9 à proximité de chaque ouverture 5 dans la paroi intérieure 2 et des paires de trous 10 dans la couronne extérieure A.

La couronne extérieure A sert au stockage d'une certaine longueur des joncs, et la couronne intérieure B sert au stockage des fibres optiques des joncs ; les dispositifs de raccordement tels que 11 entre deux fibres optiques sont également logés dans la couronne intérieure B.

Le support de la figure 1 est placé verticalement dans la boîte de raccordement, avec d'autres supports identiques, placés côte à côte, lesdits supports permettant le raccordement des joncs des câbles aboutissant à ladite boîte.

Dans la figure 1 on a représenté à titre d'exemple deux joncs J1 et J2 ayant le même nombre de fibres optiques et entrant dans le support à l'opposé l'un de l'autre ; bien entendu on pourrait avoir d'un côté un jonc ayant par exemple dix fibres optiques à raccorder à deux joncs à cinq fibres de l'autre côté, et d'une manière générale plusieurs joncs d'un côté du support à raccorder à plusieurs joncs de l'autre côté dudit support.

Les joncs ont, entre leur entrée dans la boîte de raccordement et leur extrémité fixée sur le support, une certaine longueur dite réserve de jonc de par exemple deux mètres ; à l'extrémité des joncs les fibres optiques sont séparées les unes des autres sur une certaine longueur qui constitue également une réserve de fibres optiques, de l'ordre de quelques dizaines de centimètres. L'extrémité de chaque jonc est fixée sur le support à l'aide des paires de trous 9 et 10. Après raccordement des fibres par un dispositif de raccordement 11, de type individuel ou collectif de tout type connu, les fibres optiques et les dispositifs de raccordement sont disposées dans la couronne intérieure B autour du cylindre central 3 ; ensuite les joncs sont enroulés dans la couronne extérieure, jusqu'à ce que le support prenne sa place dans la boîte de raccordement. Pour toute intervention sur les fibres et/ou les dispositifs de raccordement, le support est dégagé de son emplacement dans la boîte de raccordement, puis les joncs sont déroulés de la couronne extérieure, ce qui permet de sortir le support de la boîte de raccordement grâce à la longueur de réserve des joncs enroulés sur le support.

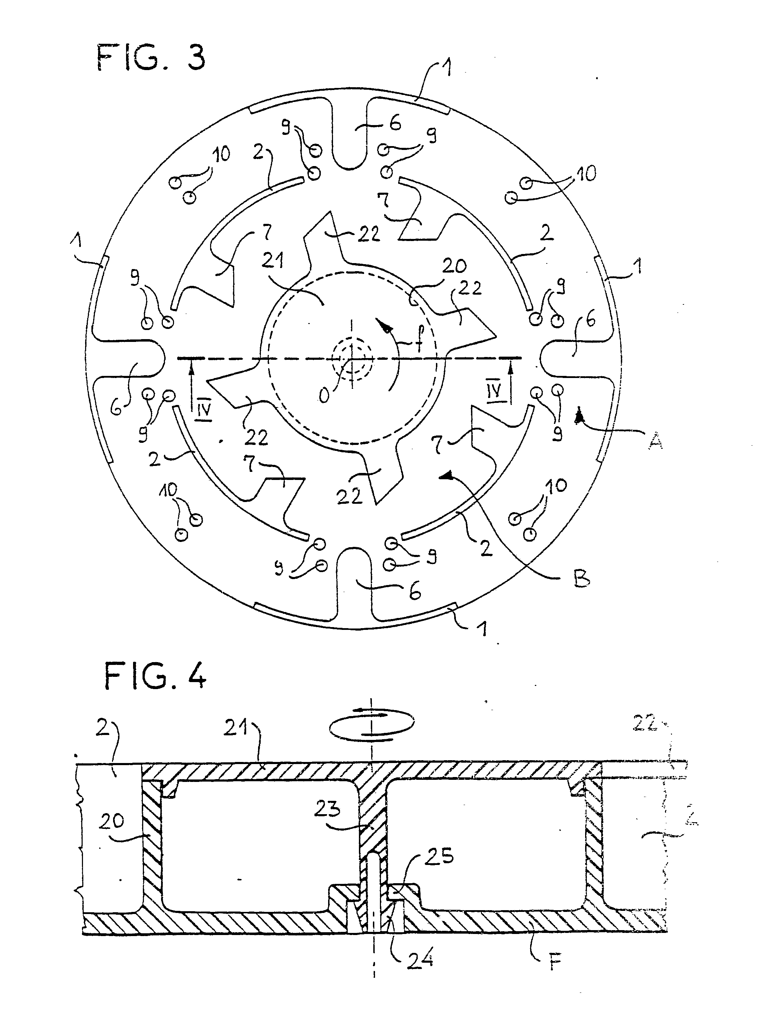

Les figures 3 et 4 représentent une variante du support de l'invention représenté figures 1 et 2.

Alors que dans les figures 1 et 2 le cylindre central 3 obtenu par moulage porte les pattes 8, dans les figures 3 et 4, le cylindre central 20 est également obtenu par moulage, mais il est fermé par un couvercle 21 qui porte des pattes 22 ; ce couvercle est muni d'un axe 23 dont l'extrémité 24 vient s'encliqueter dans un bossage 25 au centre du fond F du support. Le couvercle 21 est donc mobile autour de son axe 23, et la figure 3 donne sa position lorsque l'on vient loger les fibres optiques dans la couronne intérieure B ; lorsque toutes fibres optiques sont en place, on fait pivoter le couvercle dans le sens indiqué par la flèche f pour amener les pattes 22 en contact avec les pattes 7 de la paroi intérieure 2 du support. Afin d'assurer un bon contact entre les pattes 7 et 22 celles-ci ont leur extrémité biseautée ; lorsque les pattes 7 et 22 sont en contact, les joncs sont enroulés dans la couronne extérieure A et le support est remis en place dans la boîte de raccordement ; le bon contact entre les pattes 7 et 22 empêche les fibres optiques de sortir de la couronne intérieure B au cours de la manipulation du support.

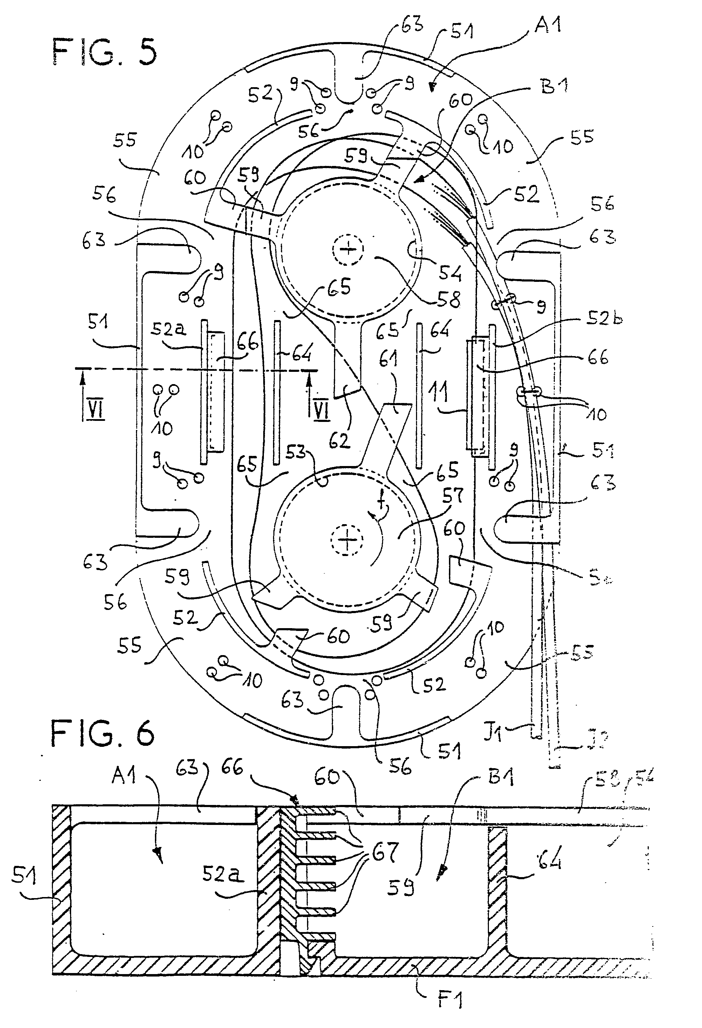

Les figures 5 et 6 représentent une variante d'un support de l'invention qui se présente sous la forme d'une galette oblongue ayant un fond F1, une paroi extérieure 51 comportant des ouvertures 55, une paroi intérieure 52 comportant des ouvertures 56, un premier cylindre 53 et un deuxième cylindre 54, identiques, ayant chacun un couvercle 57, 58, mobile, portant des pattes 59 coopérant avec des pattes 60 solidaires de la paroi intérieure 52 et une patte additionnelle 61, 62, respectivement ; ces pattes 61, 62 sont situées entre les deux cylindres et coopèrent entre elles ; les pattes 60 de la paroi intérieure 52 et celles des couvercles ont leur extrémité biseautée, comme dans le cas de la figure 3. Les couvercles 57, 58, mobiles, sont de type illustré par les figures 3 et 4. La paroi extérieure 51 comporte des pattes 63, dirigées vers l'intérieur du support, comme dans le cas des figures 1 et 3. Entre les deux cylindres 53, 54, le support comporte deux parois longitudinales 64, parallèles entre elles, leur distance étant égale au diamètre des cylindres ; chaque paroi longitudinale ménage entre elle et les cylindres 52, 53 des passages 65, pour les fibres optiques.

Une barrette de fixation 66 des dispositifs de raccordement 11 des fibres optiques est fixée par encliquetage dans le fond F1, contre chacune des parties 52a et 52b de la paroi intérieure comprises entre les deux cylindres 53, 54 ; chaque barrette comporte des dents 67 pour la fixation des dispositifs de raccordements qui sont insérés entre deux dents.

Les parois extérieure 51 et intérieure 52 ménagent entre elles une couronne extérieure A1 de forme oblongue ; la paroi intérieure 52, y compris ses parties 52a et 52b, d'une part, et les cylindres 53, 54 et les parois longitudinales 64 d'autre part, ménagent entre eux une couronne intérieure B1 de forme oblongue. Les barrettes de fixation 66 sont fixées à l'intérieur de la couronne intérieure B1.

Le support de la figure 5 assure les mêmes fonctions que les supports des figures 1 et 3, c'est-à-dire le raccordement de joncs entre eux dans le cas où les arrivées des joncs sont situées de deux côtés opposés, le support étant placé verticalement dans la boîte de raccordement. Le support assure également le raccordement de joncs situés d'un même côté du support ; dans ce cas, illustré figure 5, avec, uniquement à titre d'exemple, seulement deux joncs J1, J2 situés d'un même côté, un changement de sens d'enroulement dans le stockage des fibres optiques dans la couronne intérieure B1 est nécessaire ; pour cela, comme représenté figure 5, on utilise l'espace compris entre les deux cylindres 53 et 54, les fibres optiques passant entre l'un des cylindres et une des parois longitudinales 64, et entre l'autre cylindre et l'autre paroi longitudinale.

L'écartement des cylindres ainsi que leur rayon permet de garantir un rayon de courbure minimum pour les fibres optiques, afin que celles-ci ne soient pas détériorées lors du changement de sens d'enroulement dans la couronne intérieure B1.

Quel que soit le support utilisé, galette cylindrique des figures 1 et 3 ou galette oblongue de la figure 5, les dispositifs de raccordement 11 entre les fibres optiques sont logés dans la couronne intérieure et sont de tout type connu ; par exemple le type individuel, fibre par fibre, ou collectif par jonc.

Lorsque les pattes 59 des cylindres sont en contact avec les pattes 60 de la paroi intérieure, par rotation des couvercles 57, 58, les pattes 61 et 62 des couvercles sont également en contact ; ainsi il est possible de manipuler la galette oblongue sans que les fibres optiques sortent de la couronne intérieure B1 et de l'espace délimité par les deux cylindres et les parois longitudinales 64.

Comme dans le cas de la galette cylindrique de la figure 1, le fond F1 de la galette oblongue comporte des paires de trous 10 dans la couronne extérieure A1, et des paires de trous 9 à proximité immédiate des ouvertures 56 de la paroi intérieure 52, pour la fixation des joncs.

Bien évidemment les cylindres 53, 54 peuvent ne pas comporter de couvercles, les pattes 59, 61, 62 étant alors solidaires des cylindres. De même les barrettes 66 de fixation des dispositifs de raccordement des fibres optiques peuvent être fixées contre les parois longitudinales 64, dans la couronne intérieure B1.

## Revendications

1. Support de raccordement de fibres optiques pour le raccordement des fibres optiques d'au moins un jonc (J1) à celles d'au moins un autre jonc (J2), et notamment des fibres optiques d'un jonc à celles d'un ou deux autres joncs, par l'intermédiaire de dispositifs de raccordement (11), lesdits joncs étant destinés à être fixés en extrémité audit support et ces joncs étant issus de câbles destinés à être fixés en extrémité à une boîte de raccordement destinée à contenir ledit support ainsi que d'autres supports identiques pour le raccordement des fibres optiques d'autres joncs desdits câbles, caractérisé par le fait que ledit support est constitué par une galette comportant un fond (F), une paroi latérale extérieure (1) munie d'ouvertures (4), une paroi latérale intérieure (2) munie d'ouvertures (5), et au moins un cylindre (3) à l'intérieur de ladite paroi latérale intérieure, la paroi latérale intérieure (2) délimitant ainsi d'une part avec la paroi latérale extérieure (1) une couronne extérieure (A) et d'autre part avec le(s) cylindre(s) (3) une couronne intérieure (B), lesdites ouvertures (4, 5) respectivement ménagées dans lesdites parois latérales extérieure (1) et intérieure (2) étant destinées à permettre l'amenée des joncs (J1, J2) jusqu'à ladite couronne intérieure (B), ladite couronne intérieure (B) étant destinée à servir au stockage de longueurs de réserve des fibres optiques et des dispositifs de raccordement (11), et ladite couronne extérieure (A) étant destinée à servir au stockage de longueurs de réserve des joncs lorsque ledit support est en place dans la boîte de raccordement.

2. Support de raccordement de fibres optiques selon la revendication 1, caractérisé par le fait qu'il est destiné à être disposé verticalement dans la boîte de raccordement, côte à côte avec lesdits autres supports identiques.

3. Support selon la revendication 1, caractérisé par le fait que le fond (F) comporte des premières paires de trous (10) dans la couronne extérieure (A) et des deuxièmes paires de trous (9) à proximité des ouvertures (5) de la paroi latérale intérieure (2) pour la fixation des joncs (J1, J2).

4. Support selon la revendication 1, caractérisé par le fait que le support est une galette cylindrique et comporte un cylindre central (3).

5. Support selon la revendication 1, caractérisé par le fait que le support est une galette oblongue et comporte deux cylindres intérieurs (53, 54) identiques.

6. Support selon la revendication 5, caractérisé par le fait qu'il comporte deux parois longitudinales (64) situées entre les cylindres et séparées entre elles par une distance égale au diamètre des cylindres.

7. Support selon la revendication 1, caractérisé par le fait que la paroi extérieure (1) et la paroi intérieure (2) comportent chacune des pattes (6, 7) dirigées vers l'intérieur du support et que le, ou les, cylindre(s) comportent des pattes (8) dirigées vers la paroi intérieure (2).

8. Support selon l'une des revendications 1 et 7, caractérisé par le fait que le, ou les, cylindre(s) sont fixes.

9. Support selon l'une des revendications 1 et 7, caractérisé par le fait que le, ou les, cylindre(s) (1) comportent un couvercle (57, 58) mobile en rotation, lesdites pattes (8) du cylindre étant solidaires du couvercle.

10. Support selon l'une des revendications 5 et 6, caractérisé par le fait qu'il comporte au moins une barrette (66) de fixation des dispositifs de raccordement (11) des fibres optiques, ladite barrette étant fixée dans la couronne intérieure (B).

## Claims

1. A connection support for connecting optical fibres of at least one strand (J1) to the fibres of at least one other strand (J2), and in particular for connecting the optical fibres of one strand to those of one or two other strands by means of connection devices (11), said strand being intended to be fixed at their ends to said support, and said strands issuing from cables that are intended to be fixed at their end to a connection box, which in turn is intended to include said support as well as other identical supports for interconnecting optical fibres issuing from other strands of said cable, the support being characterized in that it is constituted by a drum comprising a base (F), an outer side wall (1) provided with openings (4) therethrough, an inner side wall (2) provided with openings (5) therethrough, and by at least one cylinder (3) disposed inside the inner side wall, so that the inner side wall (2) delimits, on the one hand, in conjunction with the outer side wall (1), an outer annular space (A) and on the other hand, in conjunction with the cylinder(s) (3), an inner annular space (B), said openings (4, 5) provided respectively in said outer (1) and inner side walls (2) and being intended to allow the strands (J1, J2) to reach said inner annular space (B), said inner annular space (B) being intended to serve for storing excess lengths of optical fibres and of connection devices (11), whereas said outer annular space (A) is intended to serve for storing excess lengths of the strands, when said support is placed in the connection box.

2. An optical fibre connection support according to claim 1, characterized in that it is intended to be disposed vertically inside the connection box side-by-side with other identical supports.

3. A support according to claim 1, characterized in that the base (F) includes first pairs of holes (10) in the outer annular space (A) and second pairs of holes (9) close to said openings (5) through said inner lateral wall (2) for securing said strands (J1, J2).

4. A support according to claim 1, characterized in that the support is constituted by a cylindrical drum and includes a central cylinder (3).

5. A support according to claim 1, characterized in that the support is constituted by an oblong drum and includes two identical inner cylinders (53, 54).

6. A support according to claim 5, characterized in that it comprises two longitudinal walls (64) situated between the cylinders and separated from each other by a distance equal to the diameter of the cylinders.

7. A support according to claim 1, characterized in that both the outer wall (1) and the inner wall (2) include lugs (6, 7) which are directed towards the interior of the support and that the cylinder(s) include(s) lugs (8) which are directed towards the inner wall (2).

8. A support according to any one of claims 1 and 7, characterized in that the or each cylinder is stationary.

9. A support according to any one of claims 1 to 7, characterized in that the or each cylinder (1) includes a rotatable cover (57, 58), said lugs (8) of the cylinder being fixed to said cover.

10. A support according to claim 5 or 6, characterized in that it comprises at least one rack (66) for securing the optical fibre connection devices (11), said rack being fixed in said inner annular space (B).

## Patentansprüche

1. Anschlußträger für Lichtleitfasern zum Anschließen der Lichtleitfasern mindestens eines Stranges (J1) an die Fasern mindestens eines anderen Stranges (J2), insbesondere der Lichtleitfasern eines Stranges mit Hilfe von Verbindungsvorrichtungen (11) an die Fasern eines oder zweier anderer Stränge, wobei die Stränge dazu bestimmt sind, mit ihrem Ende an den Trägers angeschlossen zu werden, und aus Kabeln hervorstehen, die mit ihrem Ende an einem Anschlußgehäuse angeschlossen werden sollen, welches für die Aufnahme des Trägers sowie anderer identischer Anschlußträger für Lichtleitfasern anderer Stränge der Kabel vorgesehen sind, dadurch gekennzeichnet, daß der Träger aus einer Rolle mit einem Boden (F), einer äußeren, Löcher (4) aufweisenden Seitenwand (1), einer inneren, mit Löchern (5) versehenen Seitenwand (2), und mit mindestens einem Zylinder (3) innerhalb der inneren Seitenwand besteht, wobei die innere Seitenwand (2) einerseits mit der äußeren Seitenwand (1) einen äußeren Ringraum (A) und andererseits mit dem Zylinder (3) bzw. den Zylindern einen inneren Ringraum (B) begrenzt, wobei die Öffnungen (4, 5), die in der äußeren (1) bzw. in der inneren (2) Seitenwand angebracht sind, dazu bestimmt sind, das Heranführen der Stränge (J1, J2) bis an den inneren Ringraum (B) zu ermöglichen, und wobei der innere Ringraum (B) dazu dient, Reservelängen der Lichtleitfasern und die Anschlußvorrichtungen (11) aufzunehmen, während der äußere Ringraum (A) dazu dient, Reservelängen der Stränge aufzunehmen, wenn der Träger im Anschlußgehäuse untergebracht ist.

2. Anschlußträger für Lichtleitfasern nach Anspruch 1, dadurch gekennzeichnet, daß er dazu bestimmt ist, senkrecht neben den anderen identischen Trägern im Anschlußgehäuse angeordnet zu werden.

3. Träger nach Anspruch 1, dadurch gekennzeichnet, daß erste Paare von Löchern (10) im äußeren Ringraum (A), und zweite Paare von Löchern (9) in der Nähe der Löcher (5) in der inneren Seitenwand (2) zur Befestigung der Stränge (J1, J2) vorgesehen sind.

4. Träger nach Anspruch 1, dadurch gekennzeichnet, daß der Träger eine zylindrische Rolle ist und einen zentralen Zylinder (3) aufweist.

5. Träger nach Anspruch 1, dadurch gekennzeichnet, daß der Träger eine längliche Rolle ist und zwei identische innere Zylinder (53, 54) aufweist.

6. Träger nach Anspruch 5, dadurch gekennzeichnet, daß er zwei Längswände (64) besitzt, die sich zwischen den Zylindern befinden und voneinander durch einen Abstand getrennt sind, der dem Durchmesser der Zylinder entspricht.

7. Träger nach Anspruch 1, dadurch gekennzeichnet, daß die äußere Wand (1) und die innere Wand (2) jeweils Klauen (6, 7) aufweisen, welche ins Innere des Trägers gerichtet sind, und daß der oder die Zylinder Klauen (8) aufweisen, die zur inneren Wand (2) hin gerichtet sind.

8. Träger nach Anspruch 1 oder 7, dadurch gekennzeichnet, daß der oder die Zylinder feststehend sind.

9. Träger nach Anspruch 1 oder 7, dadurch gekennzeichnet, daß der oder die Zylinder (1) einen drehbaren Deckel (57, 58) aufweisen und die Klauen (8) des Zylinders fest mit dem Deckel verbunden sind.

10. Träger nach Anspruch 5 oder 6, dadurch gekennzeichnet, daß er mindestens eine Schiene (66) zur Befestigung der Anschlußvorrichtungen (11) der Lichtleitfasern besitzt und die Schiene im inneren Ringraum (B) befestigt ist.

# FIG. 1

# FIG. 2

FIG. 3

FIG. 4

FIG. 5

FIG. 6